# EUROPEAN PATENT SPECIFICATION

(11) **EP 1 932 631 B1**
(45) Date of publication and mention of the grant of the patent: **08.02.2012**
(21) Application number: 06025760.7
(22) Date of filing: 13.12.2006
(51) Int. Cl.: A61C 19/00, A61C 1/00, B25J 19/00, F16M 11/04

(54) **Manually guided articulated arm**
Manuell geführter Gelenkarm
Bras articulé commandé manuellement

(43) Date of publication of application: 18.06.2008
(73) Proprietor: Fotona d.d., 1210 Ljubljana (SI)
(72) Inventor: Marincek, Marko, 1000 Ljubljana (SI); Kranjec, Jozica, 4248 Lesce (SI); Lukac, Matjaz, 1000 Ljubljana (SI)
(74) Representative: Riedel, Peter

(56) References cited:
- EP-A- 1 632 320
- WO-A-03/100313
- WO-A-2007/054327
- DD-A1- 154 282
- US-A1- 2004 245 419
- US-B1- 6 253 458

## Description

The invention relates to a manually guided articulated arm according to the features of the preamble of claim 1 that comprises an optical hand piece for applying a laser beam to a treatment zone.

Such an articulated arm is described in U.S. 5,474,449. The different arm sections of the articulated arm are pivotably connected to one another. The ends of the respective arm sections are angled by 90° and connected to intermediate torsion joints, respectively. An optical hand piece for applying a laser beam to a treatment zone, mounted on the outermost end of the articulated arm, is guided manually to the treatment zone wherein the articulated arm enables with its individual torsion joints a free movability of the hand piece in all six spatial degrees of freedom.

When using the aforementioned arrangement, a series of disadvantages is encountered. For a precise manual guiding action of the hand piece, it is necessary that its movement can be effected as effortless as possible. The weight of the articulated arm however is contrary to such a requirement and, without compensating measures, requires that an appropriate manual force be applied on the hand piece.

U.S. 5,474,449 proposes different devices for relieving the weight. In one embodiment, a tension spring acts on a tension cable which is wound about a rotating disk in the first joint that is exposed to the greatest load. A moment resulting from the weight force in the correlated joint is at least partially compensated by the interaction of the tension spring with the disk. However, the tension spring has a linear spring characteristic and thus also a linear restoring characteristic. Moreover, by means of the illustrated tension cable only tension forces and no pressure forces can be transmitted. A weight-relieved pivoting action that goes beyond the vertical direction is therefore impossible.

Alternatively, U.S. 5,474,449 proposes a lever arm with a compensation weight. In order to generate a moment compensation, a correspondingly large lever arm or correspondingly large weight is required that restricts the movability of the articulated arm. Resting the articulated arm in a rest position and moving the articulated arm into a pivot range that is provided for operation are made more difficult.

In its resting position, the largest arm segment of both embodiments is arranged parallel to the axis of rotation of the compensated joint. During operation the aforementioned arm segment may be used within a larger angle range and even at 90° with respect to the axis of rotation of the compensated joint, applying a much larger weight force moment compared to the resting position. The operational weight force moment varies to a large and unpredictable extent. It is therefore hardly possible to generate within the entire pivot angle range a moment compensation for an effortless actuation.

Further disadvantages can be observed in the articulated arm section that immediately adjoins the hand piece. Three angle pieces are provided here that each have two arm segments positioned at a fixed angle of 90° relative to one another. At the ends of the short arm segments, a torsion joint is provided, respectively. Small, precise movements of the hand piece are enabled by the torsion joints of the three right-angle angle pieces without this requiring large spatial movements of the long arm sections that are farther located from the hand piece. For precise small spatial movements, a distinct easy movability of the torsion joints at the angle pieces is desired. However, it was found that when carrying out certain courses of movements, individual torsion joints have the tendency to jam or to make unpredictable flipping movements; this impairs the precision of the guiding action of the hand piece.

The document WO 03/100313 A1 discloses a manually guided articulated arm with a balancing spring arrangement comprising a cam disk and a pressure member. However, this arm is not provided with an optical hand piece and it can only travel in a positive pivot angle range.

The invention has the object to further develop an articulated arm of the aforementioned kind such that a guiding action of the hand piece as effortless and precise as possible is enabled with simple means.

This object is solved by an articulated arm having the features of claim 1.

A manually guided articulated arm is proposed in which a spring arrangement provided on a pivot joint has a cam disk and a pressure member forced against the cam disk by spring pretension and guided along the contour of the cam disk as a function of a pivot angle of the arm section. wherein the pivot joint has a pivot axis that is substantially horizontal and extends transversely to the weight force direction. The interaction of the pressure member and the cam disk generates a joint moment having a course that can be adjusted almost at will as a function of the pivot angle, respectively. The circumferential contour of the cam disk can be shaped for generating a weight relief in such a way that at least approximately a sinus-shaped spring characteristic results. This counteracts in a compensating way the joint moment that is also sinus-shaped and is caused by the weight load. Onto such a sinus-shaped basic characteristic, an additional spring characteristic can be modulated by means of an appropriate curve design. This causes an automatic weight-relieved return of the articulated arm into a rest position outside of a working range of the pivot angle. From this rest position, the articulated arm can be guided against a minimal restoring force into the working range wherein the pivot angle is guided to pass through the vertical direction. Within the working range of the pivot angle on either side of the vertical direction, the articulated arm can be moved almost without applying any manual forces.

At the pivot joint with the horizontal pivot axis a positive pivot angle range of the arm section relative to the vertical direction is provided for operation wherein the contour of the cam disk and the spring pretension of the pressure member are matched to one another within the positive pivot angle range such that a weight force moment deflecting the articulated arm and a restoring moment generated by the spring arrangement are in balance for a positive balance angle deviating from the vertical direction. This balance can be a labile or indifferent balance wherein in the range of the balance position a movement can be carried almost without applying any force. Advantageously, a stable balance position is provided. This enables the operator to let go of the hand piece at least for a short period of time. The articulated arm then assumes its balance position automatically and stays at rest in this position without automatically returning into the rest position or tilting to the ground.

Moreover, a negative pivot angle range of the arm section that is negative relative to the vertical direction is provided and comprises a resting angle in which the articulated arm is resting in a support device. The contour of the cam disk and the spring pretension of the pressure member within the negative pivot angle range are matched to one another such that at the resting angle a total moment, resulting from the weight force moment and the restoring moment acting on the articulated arm about the pivot joint, acts in the direction of the support device. As a result of the acting total moment the articulated arm is positioned safely in the support device. The acting restoring moment of the spring arrangement compensates however the weight force moment only to a certain degree so that the articulated arm at the time of initiating operation can be pivoted out of the support device into the operating position with minimal force.

The arrangement of cam disk and pressure member can be configured free of any redirections or other measures that impair precision. It is compact and precise wherein the free movability of the articulated arm is not impaired.

It can be expedient to mount the cam disk stationarily while the pressure member is connected to the pivotable arm section so as to commonly pivot with the arm section. However, in an advantageous further embodiment, the reverse configuration is selected in which the pressure member is stationary and, in particular, is secured on the stationary support and in which the cam disk is connected to the pivotable arm section so as to be entrained. The weight and size of the entrained parts are minimized so that a free movability of the articulated arm is enhanced.

The pressure member can be a glide shoe or the like and is advantageously configured as a roller that is moving on the contour of the cam disk and provided, in particular, with a ball bearing. The arrangement is precise and free of play. In particular, hysteresis effects are avoided. Each pivot angle is correlated with a precisely defined spring moment that is automatically adjusted independent of the selected pivot direction.

For example, the pressure member can be forced by means of a spring-tensioned swivel arm against the contour of the cam disk. In a preferred embodiment, a linear guide is provided for forcing the pressure member against the contour of the cam disk. Angular errors in the interaction with the cam disk are avoided. The desired course of moment is precisely reproducible.

For realizing the linear guide, two parallel guide rods are expediently provided on which a guide member supporting the pressure member is guided with linear slide bearings. Advantageously, for generating the spring pretension two coil pressure springs are preferably provided. In this way, with a simple configuration a precise canting-free guiding action and, as a result thereof, a reproducible course of the characteristic line of the spring arrangement is ensured.

According to an advantageous embodiment a manually operable device that can be actuated without requiring a tool is provided for adjusting the spring tension. Based on a spring tension that is set by the manufacturer, during operation the operator himself can carry out an adjustment that takes into consideration his personal habits and preferences, for example, in regard to a minimal residual weight force or in regard to a minimal restoring force that is present in the range of the operating angle. It is also possible to compensate differently acting weight forces when the hand piece is changed.

In a preferred embodiment, the pivotable arm section is supported by means of the pivot joint on a support that is preferably a stationary support.

Expediently, the total moment is oriented within the entire negative pivot angle range, in particular, including the vertical direction, in the direction toward the support device. After completion of operation, the articulated arm must not be returned completely into the rest position; instead, it is sufficient to move the articulated arm into the vicinity of the vertical direction. When in such a position, a total moment will act that pivots the articulated arm automatically into the support device; this improves ease of operation.

In another advantageous embodiment, the articulated arm comprises in addition to the first arm section with the weight-relieved pivot joint a second arm section that is supported by means of a second pivot joint at a free end of the first arm section. The hand piece is arranged in the area of a free end of the second arm section. The arrangement enables an almost unrestricted spatial movability of the hand piece. The total center of gravity of the articulated arm changes with the pivot angle of the second arm section without this having an effect on the restoring moment of the spring arrangement of the first arm section. However, an appropriate adjustment of the spring arrangement can be made such that across the entire pivot angle range of the second arm section the occurring weight force moment is compensated at least approximately so that the manual forces become minimal. In the rest position, the second arm section can be placed parallel against the first arm section. In this way, a minimal stowing space is required.

Preferably, the first arm section and, in particular, the entire articulated arm, is pivotably supported by means of a pivot joint about an essentially vertical pivot axis that is arranged approximately parallel to the weight force, wherein the correlated spring arrangement is provided for restoring the pivot joint from a deflected position into a neutral position. After usage, the articulated arm automatically assumes its neutral position from where it can be easily returned into its rest position in which it can be deposited in a corresponding support device.

In a preferred embodiment, the articulated arm has, in immediate vicinity of the hand piece, particularly between the free end of the second arm section and the hand piece, an articulated arm section with at least two, preferably three, angle pieces that are each provided with two arm segments positioned at a fixed angle relative to one another. At the ends of the arm segments a torsion joint of the articulated arm is provided, respectively, wherein the angle of the arm segments relative to one another differs from 90°. In particular, the angle is greater than 100° and is especially preferred approximately 105°. It was surprisingly found that the jamming of the torsion joints that is observed in the prior art at angles of 90°, no longer occurs when angles are selected in accordance with the invention. The residual friction moments and break-away moments in the torsion joint are reliably overcome. In the case of a free small-size movement of the hand piece, all torsion joints stay in motion so that a precise working or precise guiding of the hand piece is simplified.

One embodiment of the invention will be explained in the following in more detail with the aid of the drawings. It is shown in:
- Fig. 1: a perspective illustration of amanually guided articulated arm according to the invention with an optical hand piece;
- Fig. 2: a side view of the articulated arm according to Fig. 1 with details in regard to the acting weight forces and the resulting moments for different pivot angles for the operating and rest positions;
- Fig. 3: a perspective detail view of the spring arrangement of the pivot joint according to Figs. 1 and 2 with details of the arrangement of a cam disk and a pressure member rolling thereon;
- Fig. 4: a side view of the arrangement according to Fig. 3 with articulated arm pivoted into the operating position for illustrating the restoring moment generated by the spring arrangement;
- Fig. 5: the arrangement according to Fig. 4 with the articulated arm in the rest position;
- Fig. 6: an enlarged detail view of the articulated arm according to Fig. 1 in the area of its multi-articulated arm section adjoining the hand piece and comprised of three angle pieces;
- Fig. 7: a schematic perspective view of the articulated arm section according to Fig. 6 illustrating the relative movement of individual angle pieces as a result of a movement of the hand piece.

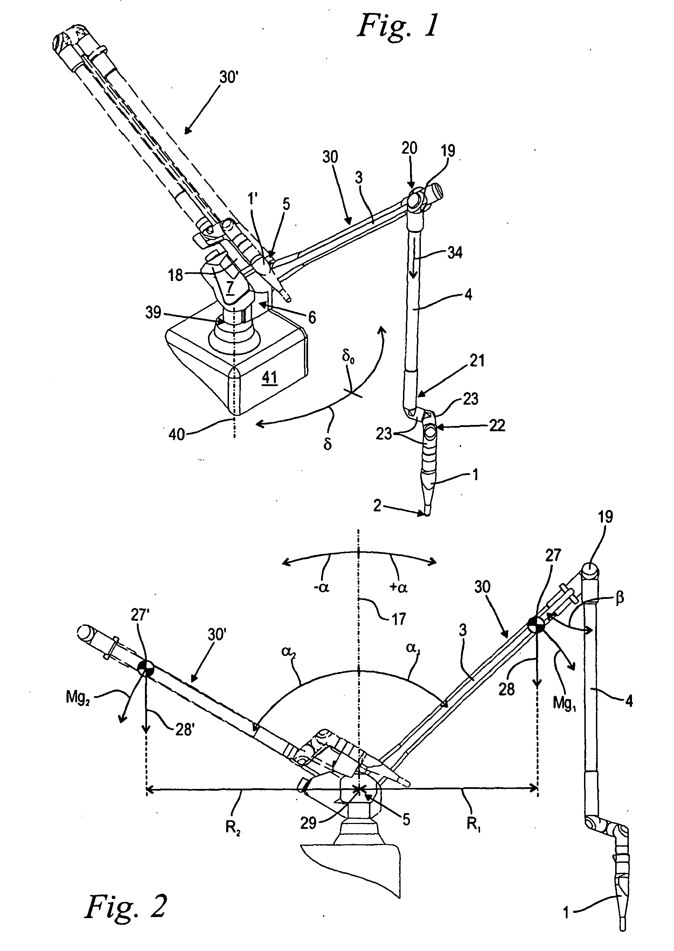

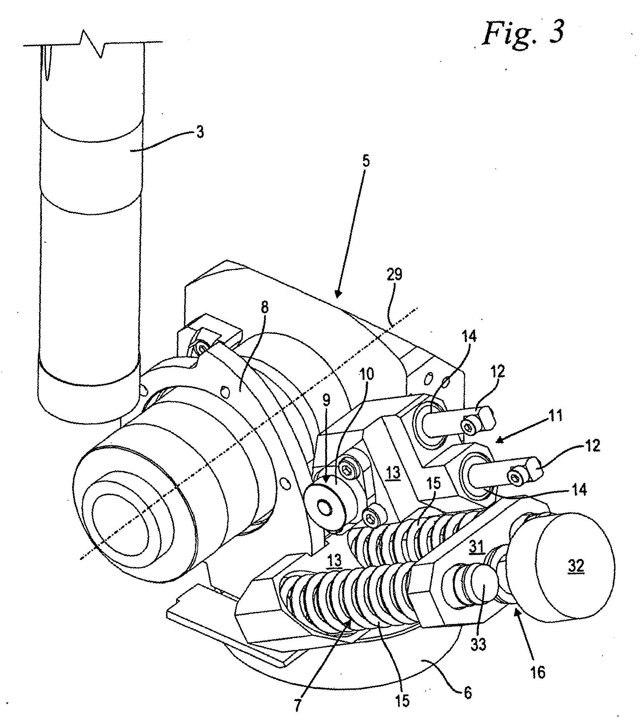

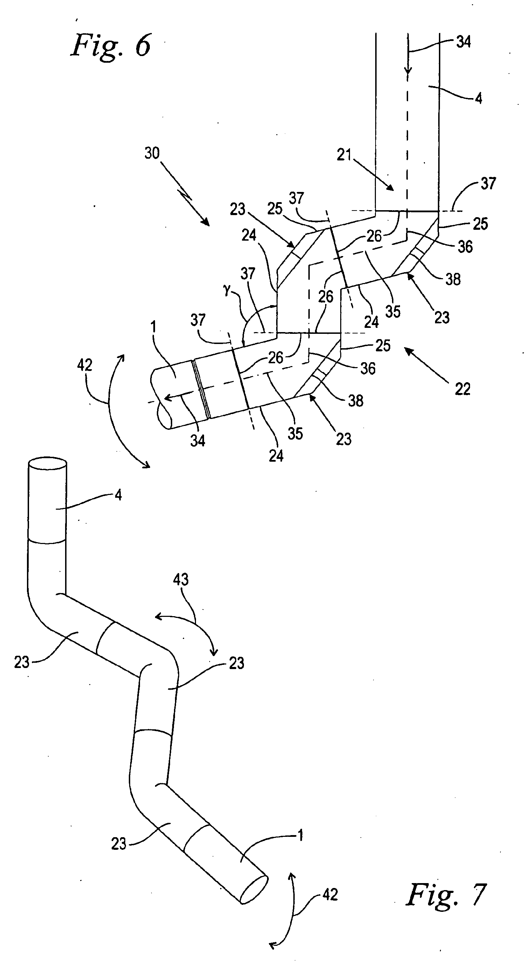

Fig. 1 shows in a perspective view a manually guided articulated arm 30 embodied in accordance with the invention. The articulated arm 30 comprises a stationary support 6 that is pivotable by means of a pivot joint 39 about a vertical pivot axis 40; a first arm section 3 and a second arm section 4; an articulated arm section 22; and a hand piece 1. The first arm section 3 is supported by means of a pivot joint 5 with a horizontal pivot axis 29 (Fig. 2, 3) on the stationary support 6. On the free end 20 of the first arm section 3 positioned opposite the pivot joint 5, an additional pivot joint 19 is provided with which the second arm section 4 is pivotably supported on the first arm section 3. In the area of the free end 21 of the second arm section 4, the hand piece 1 is arranged. Between the free end 21 of the second arm section 4 and the hand piece 1, the articulated arm section 22 is arranged that comprises at least two, in the illustrated embodiment three, angle pieces 23. The angle pieces 23 will be explained in more detail in connection with Figs. 6 and 7.

The articulated arm 30 is provided for manually guiding an optical hand piece 1 with a laser optic 2, not illustrated in detail, provided for medical treatment. By means of the laser optic 2, an externally generated laser beam, illustrated by arrow 34, is guided by angled mirrors through the articulated arm 30 to the treatment location. Non-medical laser optic may be provided as well.

The articulated arm, referenced by reference numeral 30 and shown in solid lines, is illustrated in an angular position that is provided for operation. In this connection, the weight force of the articulated arm 30 causes a pivot moment about the pivot joint 5 on the support 6; for compensating the weight, a spring arrangement 7 is provided which will be explained in connection with Figs. 3 to 5 in more detail.

By pivot movements of the pivot joints 5, 19, the articulated arm 30 can be pivoted back and forth between its operating position and a rest position in which the articulated arm is identified by reference numeral 30'. In its rest position, the articulated arm 30' rests with its hand piece 1' in the indicated support device 18.

The articulated arm 30 can also be manually pivoted as a whole about the vertical pivot axis 40 about swivel angle δ. The pivot axis 40 is positioned at least approximately parallel to the weight force direction so that moments caused by the weight force on the pivot joint 39 about the pivot axis 40 are of subordinate importance. Relative to the swivel angle δ positioned in the horizontal plane, a neutral position of the articulated arm 30 is indicated by neutral angle δ₀ within which the articulated arm 30 can be moved from its illustrated operating position into the rest position indicated by 30' and placed onto the support device 18. Starting from the neutral angle δ₀, the articulated arm 30 can be swivelled or deflected in the operating position about the pivot angle δ in both directions. The correlated pivot joint 39 with vertical pivot axis 40 is provided optionally with a spring arrangement 41, not illustrated in detail and explained infra. By means of a restoring moment, the spring arrangement 41 can move the articulated arm 30 automatically from a position deflected in any direction about pivot angle δ into the neutral angle position δ₀. Based thereon, a manual swivel action about the angle δ is carried out against the restoring moment of the spring arrangement 41. The automatic restoring action into the neutral angle δ₀ enables a simplified transition into the rest position 30'.

Fig. 2 shows the arrangement according to Fig. 1 in a side view. As a reference point for angle values for a pivoting action of the first arm section 3, a vertical direction 17 has been selected that extends through a pivot axis 29 of the pivot joint 5 positioned between the first arm section 3 and the stationary support 6. The pivot axis 29 is horizontal and thus at a right angle to the vertical direction 17 or to the weight force direction.

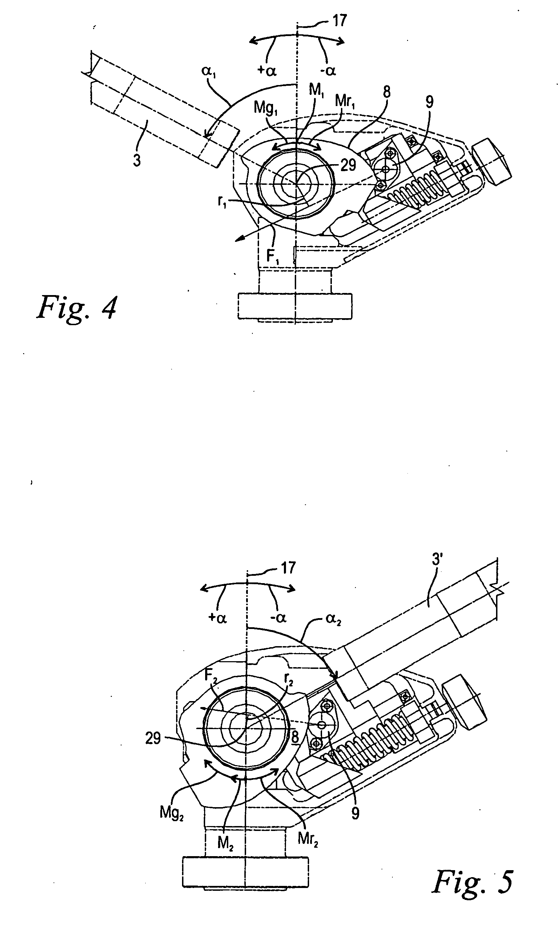

For the operation of the articulated arm 30, a positive pivot angle range +α of the arm section 3 is provided relative to the vertical direction 17. The articulated arm 30 is shown within the positive pivot angle range +α at a balance angle α₁ to be described infra in connection with Fig. 4. In the same pivot plane the second arm section 4 is pivotable relative to the first arm section 3 at the pivot joint 19 about the angle β. The pivot axis of the pivot joint 19 is also horizontal and parallel to the pivot axis 29. In the illustrated balance position, the hand piece 1 has been released by the operator so that the arm section 4 with the hand piece 1 is freely suspended under the action of the weight force. Based on this position, by manually guiding the hand piece 1 the pivot angle β can be enlarged or decreased. Moreover, a greater or smaller pivot angle α relative to the balance angle α₁ can be adjusted.

The movable part of the articulated arm 30 has a center of gravity 27 in which a weight force 28 acts parallel to the vertical direction 17. At the balance angle α₁ the weight force 28 relative to the pivot axis 29 of the pivot joint 5 has a distance vector from the pivot axis 29 to the center of gravity 27, the horizontal projection of the distance vector defining a lever arm R₁. The cross product of weight force 28 and lever arm R₁ results in a weight force moment Mg₁, its vector being disposed parallel to the pivot axis 29. The weight force moment Mg₁ acts in the clockwise direction on the first arm section 30, and tends to increase the absolute value of the pivot angle α. The course of the weight force moment Mg₁ as a function of the pivot angle α is essentially sinus-shaped.

From its operating position, the movable part of the articulated arm 30 can be pivoted through the vertical direction 17 into a negative angle range -α. Within the negative angle range -α, a resting angle α₂ is provided in which the articulated arm 30' rests in the support device 18 (Fig. 1). At the center of gravity 27' of the articulated arm 30', a weight force 28' acts with a lever arm R₂ about the pivot axis 29 of the pivot joint 5. This leads to a weight force moment Mg₂ acting counterclockwise in the direction of the resting angle α₂, analog to the weight force moment Mg₁ at a positive pivot angle α.

For influencing the moment acting on the pivot joint 5 and in particular for providing relief from the weight force moments Mg₁, Mg₂, the spring arrangement 7 is provided that is schematically indicated in Fig. 1 and illustrated in detail in the perspective view of Fig. 3. The spring arrangement 7 has a cam disk 8 and a pressure member 9 that rests against the circumferential contour of the cam disk 8 under spring pretension and is guided along the contour of the cam disk 8 as a function of the pivot angle α of the arm section 3 (Fig. 2). The cam disk 8 is connected to the pivotable arm section 3 so as to be entrained by it. The pressure member 9 is secured by means of a linear guide 11 on the stationary support 6.

The pressure member 9 can be a glide shoe or a similar device and is configured in the illustrated embodiment as a ball bearing-supported roller 10 that rolls on the circumferential contour of the cam disk 8. A pair of coil pressure springs 15 is part of the spring arrangement 7; the springs 15 force with elastic pretension the pressure member 9 against the circumferential contour of the cam disk 8. Instead of the coil pressure springs 15 it is also possible to employ a leg spring or the like that forces the pressure member 9 by means of a pivot arm against the cam disk 8. In the illustrated embodiment, the coil pressure springs 15 act on the linear guide 11 by means of which the pressure member 9 is forced by a straight, linear movement against the cam disk 8.

The linear guide 11 comprises two parallel guide rods 12 on which a guide member 13 supporting the pressure member 9 is guided with two linear slide bearings 14. The longitudinal axes of the guide rods 12 are positioned approximately radially to the pivot axis 29 of the pivot joint 5 so that the guide member 13 together with the pressure member 9 is forced radially inwardly toward the pivot axis 29 against the outer circumferential contour of the cam disk 8 from the exterior. Alternatively, a reverse configuration can be expedient in which the cam disk 8 has an opening with an inner curved contour wherein the pressure member 9 is forced radially from the interior outwardly against this inner contour in the radial direction.

A further part of the spring arrangement 7 is comprised of a manually operated device 16 that requires no tools for actuation and enables adjustment of the spring pretension. For this purpose, two parallel guides 33 are provided that pass through the two coil pressure springs 15; a pressure plate 31 is axially movably guided on the guides 33. The manually actuatable knurled screw 32, requiring no tool, is provided for axial movement of the pressure plate 31 relative to the support 6 so that the spring pretension of the coil pressure springs 15 arranged therebetween can be adjusted or matched. The longitudinal axes of the coil pressure springs 15 and of the guides 33 are positioned axis-parallel to the two guide rods 12.

Fig. 4 shows a side view of the arrangement according to Fig. 3 with the arm section 3 at the balance angle α₁. By looking also at Fig. 2, wherein the same features are identified with same reference numerals, it is apparent that at the resting angle α₁ the weight force moment Mg₁ is acting in the direction of the positive pivot angle range +α.

The circumferential contour of the cam disk 8 and the spring pretension of the pressure member 9 adjusted in accordance with Fig. 3 are matched to one another in such a way that the pressure member 9 with its force F₁ acts with a lever arm r₁ relative to the pivot axis 29 on the circumferential contour of the cam disk 8. The lever arm r₁ is the projection of the distance vector between the pivot axis 29 and the contact point of the pressure member 9 and the cam disk 8 onto a plane that is perpendicular to the force F₁ and includes the pivot axis 29. The force F₁ and the lever arm r₁ generate a restoring moment Mr₁, whose vector being disposed parallel to the pivot axis 29. The restoring moment Mr₁ counteracts the weight force moment Mg₁ and acts on the first arm section 30 toward the vertical direction 17. For the balance angle α₁, the absolute value of both moments is identical but oppositely oriented. They are in balance so that a resulting moment M₁ acting about pivot axis 29 is generated that has the absolute value zero. The balance between the weight force moment Mg₁ and the restoring moment Mr₁ is a stable balance so that the articulated arm 30 at the balance angle α₁ according to Fig. 2 maintains its position automatically even when the hand piece 1 (Fig. 2) is let go of.

Fig. 5 shows the arrangement according to Fig. 4 with the first arm section 3' at the rest angle α₂ wherein the weight force moment Mg₂ according to Fig. 2 acts clockwise in the direction of the negative pivot angle range -α, i.e., has the tendency to enlarge the absolute value of the resting angle α₂. The contour of the cam disk 8 and the spring pretension of the pressure member 9 are adjusted relative to one another such that at the resting angle α₂ the pressure member 9 acts with pressure force F₂ against the circumferential contour of the cam disk 8; the pressure force F₂ has a lever arm r₂ relative to the pivot axis 29. Pressure force F₂, lever arm r₂ and a resulting restoring moment Mr₂ are defined analog to pressure force F₁, lever arm r₁ and restoring moment Mr₁.

At the resting angle α₂ the pressure force F₂ generates together with the corresponding lever arm r₂ a counterclockwise acting restoring moment Mr₂ in the direction toward the positive pivot angle range +α and thus opposite to the weight force moment Mg₂. The restoring moment Mr₂ has a smaller absolute value in comparison to the weight force moment Mg₂ so that the resulting total moment M₂ acting on the arm section 3' acts in the clockwise direction, i.e., has the tendency to enlarge the resting angle α₂ of the arm section 3'. In this way, the arm section 3' or the entire movable part of the articulated arm 30' is forced into the support device 18 (Fig. 1). The restoring moment Mr₂ acts however as a relief so that only minimal forces or moments must be applied by hand in order to lift the articulated arm 30' from the position defined by resting angle α₂ and to move it into the operating position 30 according to Fig. 4.

When looking at both Fig. 4 and Fig. 5, it can be seen that the pressure forces F₁ and F₂ starting at the pressure member 9 have different orientations and pass on different sides of the pivot axis 29, i.e., generate moments Mr₁, Mr₂ with different sign. This is a result from the course of the circumferential contour of the cam disk 8. The configuration of the pressure member 9 as an almost friction-free roller allows only forces in the direction of the surface normal of the cam disk 8 but no tangential forces. This holds true for the entire pivot angle range -α, +α. By means of constructive configuration of the circumferential contour of the cam disk, a course of the surface normal results that depends on the pivot angle α, this course presets the course of the direction of the pressure forces F₁ and F₂ depending on the pivot angle α. The local radius of the circumferential contour of the cam disk 8 is moreover a measure for the linear deflection of the pressure member 9 and thus also for the pretension of the coil pressure springs 15 (Fig. 3) and, as a result thereof, for the absolute value of the pressure forces F₁ and F₂. In this way, restoring moments Mr₁, Mr₂ with any sign and any absolute value, including the absolute value zero, can be adjusted.

From the description of Fig. 2 it can be taken that the weight force moment Mg is approximately zero when the articulated arm 30 is positioned perpendicularly to the vertical direction 17. The contour of the cam disk 8 and the pressure force of the pressure member 9 are adjusted relative to one another such that in this position a restoring moment Mr corresponding to the restoring moment Mr₁ according to Fig. 4 results. In connection with the missing weight force moment Mg a small resulting moment M is generated in accordance with the resulting moment M₂ according to Fig. 5. In this connection, the adjustment of the spring arrangement 7 (Fig. 3) is selected such that the total moment M₂ within the entire negative pivot angle range -α, including the vertical direction 17, is oriented in the direction toward the support device 18 (Fig. 1). In particular, in this angle range the total moment M₂ in accordance with illustration of Fig. 5 is of a small, approximately constant absolute value.

The spring arrangement 41 acting about the vertical pivot axis 40 of the pivot joint 39 and illustrated in Fig. 1 is configured according to the same principle as the spring arrangement 7 according to Figs. 1 and 3 to 5. The contour of a corresponding cam disk 8 and the spring pretension of a corresponding pressure member 9 are adjusted relative to one another such that the return of the articulated arm 30 into the neutral angle δ₀ is initiated as described in connection with Fig. 1.

Fig. 6 shows an enlarged side view of the articulated arm 30 in the area of its articulated arm section 22 arranged between the second arm section 4 and the hand piece 1. Three angle pieces 23 are provided that each have two arm segments 24, 25 positioned at a fixed angle γ relative to one another. The three angle pieces 23 are configured to be identical wherein a long arm segment 24 of a first angle piece 23 adjoins a short arm segment 25 of the neighboring angle piece 23. The free end 21 of the second arm section 4 adjoins a short arm segment 25 of the neighboring angle piece 23 while the hand piece 1 adjoins a long arm segment 24 of the neighboring angle piece 23. Segment axes 35, 36 of the arm segments 24, 25 are positioned at a fixed unchangeable angle γ relative to one another; the angle γ differs from 90° and is preferably greater than 100°; in particular, it is approximately 105° in the illustrated embodiment.

In the corner areas of each angle piece 23 a mirror 38 is provided that is positioned perpendicularly to the bisecting line of the angle γ. In this way, the laser beam that is introduced parallel to the longitudinal axis of the second arm section 4 in accordance with arrow 34 is guided through the angle pieces 23 parallel to the segment axes 35, 36 and parallel to the longitudinal axis of the hand piece 1.

At the ends of each arm segments 24, 25 a torsion joint 26 of the articulated arm 30 is provided and forms a joint plane 37, respectively. The hand piece 1, the second arm section 4, and all three angle pieces 23 are rotatable relative to one another in the joint planes 37 about their respective longitudinal axes or segment axes 35, 36 in a torsion movement. By means of a manual movement of the hand piece 1 in all six spatial degrees of freedom, torsion moments result in the individual joint planes 37, the torsion vectors being parallel to the segment axes 35, 36, and causing an articulated movement about the respective segment axes 35, 36.

However, under certain conditions a free movement of the hand piece 1 is limited. In the case of Fig. 6 for example, when all three angle pieces 23 are disposed in one common plane, a swivelling movement of the end piece 1 whithin this plane as indicated by arrow 42 is impossible. A displacement of the angle pieces 23 slightly out of the common plane is necessary. In practical use, at least a minimal out-of-plane displacement is essentially present all the time, as depicted in Fig. 7. Upon a swivelling movement of hand piece 1 according to arrow 42 in Fig. 7, the out-of-plane displacement of individual angle pieces 23 is increased or decreased, as indicated for example by an arrow 43 for the middle angle piece 23.

In connection with state of the art 90° angle pieces it was found, that small movements of the hand piece 1 according to arrow 42 result in comparatively large movements of one or more angle pieces 23 according to arrow 43. Under certain circumstances a sudden flipping movement of single angle pieces 23 up to an angle of about 90° is encountered, which severely impares the precision of the guiding action of the hand piece 1.

It has been surprisingly found that a movement of a hand piece 1 connected to angle pieces 23 whith an angle γ as described along with Fig. 6, results in much smoother and significantly smaller movements of the angle pieces 23. Smaller hand forces are required at the hand piece 1 to generate these movements. The smaller hand forces in connection with the smoother and smaller movements of the angle pieces 23 lead to a significantly higher precision, when manually guiding the hand piece 1 to the treatment zone.

## Claims

1. A manually guided articulated arm (30) comprising at least one arm section (3) that is pivotably supported by means of a pivot joint (5) about a pivot axis (29), wherein the pivot joint (5) is provided with a spring arrangement (7) acting about the correlated pivot axis (29),
**characterized in that** the articulated arm is provided with an optical hand piece (1) for applying a laser beam (34) to a treatment zone and **in that**
the spring arrangement (7) comprises a cam disk (8) and a pressure member (9) resting under spring pretension against the cam disk (8) and guided along the contour of the cam disk (8) as a function of a pivot angle (α) of the arm section (3), wherein the pivot joint (5) has a substantially horizontal pivot axis (29) that is positioned transversely to the weight force direction, wherein on the pivot joint (5) with the horizontal pivot axis (29) a positive pivot angle range (+α) of the arm section (3) relative to a vertical direction (17) is provided for operation, wherein in the positive pivot angle range (+α) the spring arrangement (7) is provided for relieving the pivot joint (5) from joint moments acting thereon and caused by weight forces, wherein on the pivot joint (5) a negative pivot angle range (-α) of the arm section (3) relative to the vertical direction (17) with a resting angle (α₂) is provided at which resting angle (α₂) the articulated arm (30') rests in a support device (18), and wherein the contour of the cam disk (8) and the spring pretension of the pressure member (9) are matched to one another such that for the resting angle (α₂) a total moment (M), resulting from the weight force moment (Mg₂) and a restoring moment (Mr₂) and acting on the articulated arm (30') about the pivot joint (5), is oriented in the direction toward the support device (18).

2. The articulated arm according to claim 1,
**characterized in that** the pressure member (9) is stationarily secured and **in that** the cam disk (8) is connected to the pivotable arm section (3) so as to be entrained by it.

3. The articulated arm according to claim 1 or 2,
**characterized in that** the pressure member (9) is embodied as a roller rolling on the contour of the cam disk (8) and provided in particular with a ball bearing (10).

4. The articulated arm according to one of the claims 1 to 3,
**characterized in that** a linear guide (11) is provided for forcing the pressure member (9) against the contour of the cam disk (8).

5. The articulated arm according to claim 4,
**characterized in that** for forming the linear guide (11) two parallel guide rods (12) are provided on which a guide member (13) supporting the pressure member (9) is guided with linear slide bearings (14).

6. The articulated arm according to one of the claims 1 to 5,
**characterized in that** for generating the spring pretension at least one, and preferably two, coil pressure springs (15) are provided.

7. The articulated arm according to one of the claims 1 to 6,
**characterized in that** a manually operable device (16), requiring no tool for actuation, is provided for adjusting the spring pretension.

8. The articulated arm according to one of the claims 1 to 7,
**characterized in that** the arm section (3) is supported by means of the pivot joint (5) on a support (6) that is in particular stationary.

9. The articulated arm according to claim 8,
**characterized in that** the contour of the cam disk (8) and the spring pretension of the pressure member (9) are matched to one another such that for a positive balance angle (α₁) deviating from the vertical direction (17) a weight force moment (Mg₁) deflecting the articulated arm (30) and a restoring moment (Mr₁) generated by the spring arrangement are in balance.

10. The articulated arm according to claim 9,
**characterized in that** the balance between the weight force moment (Mg₁) and the restoring moment (Mr₁) is a stable balance.

11. The articulated arm according to one of the claims 1 to 10,
**characterized in that** the total moment (M₂) within the entire negative pivot angle range (-α), in particular inclusive of the vertical direction (17), is oriented in the direction toward the support device (18).

12. The articulated arm according to one of the claims 8 to 11,
**characterized in that** the articulated arm (30), in addition to the first arm section (3) with the weight-relieved pivot joint (5), has a second arm section (4) that is pivotably supported by means of a second pivot joint (19) at the free end (20) of the first arm section (3), wherein the hand piece (1) is arranged in the area of a free end (21) of the second arm section (4).

13. The articulated arm according to one of the claims 1 to 12,
**characterized in that** the arm section (3) is pivotably supported by means of a pivot joint (39) about a substantially vertical pivot axis (40) extending approximately parallel to the weight force direction, wherein a correlated spring arrangement (41) is provided for returning the pivot joint (39) from the deflected position into a neutral position.

14. The articulated arm according to one of the claims 1 to 13,
**characterized in that** the articulated arm (30) in immediate vicinity of the hand piece (1), in particular between the free end (21) of the second arm section (4) and the hand piece (1), has an articulated arm section (22) with at least two, preferably three, angle pieces (23) that are each comprised of two arm segments (24, 25) positioned at a fixed angle (γ) relative to one another, wherein at the ends of the arm segments (24, 25) a torsion joint (26) of the articulated arm (30) is provided, respectively, and wherein the angle (γ) differs from 90°.

15. The articulated arm according to claim 14,
**characterized in that** the angle (γ) is greater than 100° and is preferably approximately 105°.

## Patentansprüche

1. Handgeführter Gelenkarm (30) mit einem optischen Handstück (1) für die Führung eines Laserstrahls (34) zu einer Behandlungsstelle, mit mindestens einem Armabschnitt (3), der mittels eines Schwenkgelenkes (5) um eine Gelenkachse (29) schwenkbar gelagert ist, wobei das Schwenkgelenk (5) mit einer um die zugeordnete Gelenkachse (29) wirkenden Federanordnung (7) versehen ist,
**dadurch gekennzeichnet, daß** die Federanordnung (7) eine Kurvenscheibe (8) und ein unter Federvorspannung an der Kurvenscheibe (8) anliegendes, abhängig von einem Schwenkwinkel (α) des Armabschnittes (3) an der Kontur der Kurvenscheibe (8) entlang geführtes Druckstück (9) aufweist, wobei das Schwenkgelenk (5) eine im wesentlichen horizontale, quer zur Gewichtskraftrichtung liegende Gelenkachse (29) aufweist, wobei am Schwenkgelenk (5) mit der horizontalen Gelenkachse (29) ein gegenüber einer Vertikalrichtung (17) positiver Schwenkwinkelbereich (+α) des Armabschnittes (3) für den Betrieb vorgesehen ist, wobei in einem positiven Winkelbereich (α₁) die Federanordnung (7) dazu vorgesehen ist, das Schwenkgelenk (5) von darauf wirkenden und durch Gewichtskräfte erzeugte Momenten zu entlasten, wobei am Schwenkgelenk (5) ein gegenüber der Vertikalrichtung (17) negativer Schwenkwinkelbereich (-α) des Armabschnittes (3) mit einem Ruhewinkel (α₂) vorgesehen ist, in dem der Gelenkarm (30') in einer Stützvorrichtung (18) ruht, wobei die Kontur der Kurvenscheibe (8) und die Federvorspannung des Druckstückes (9) derart aufeinander abgestimmt sind, daß bei dem Ruhewinkel (α₂) ein aus dem Gewichtskraftmoment (Mg₂) und aus einem Rückstellmoment (Mr₂) resultierendes, auf den Gelenkarm (30') um das Schwenkgelenk (5) wirkendes Gesamtmoment (M) in Richtung auf die Stützvorrichtung (18) weist.

2. Gelenkarm nach Anspruch 1,
**dadurch gekennzeichnet, daß** das Druckstück (9) ortsfest gehalten ist, und daß die Kurvenscheibe (8) mit dem schwenkbaren Armabschnitt (3) mitschwenkend verbunden ist.

3. Gelenkarm nach Anspruch 1 oder 2,
**dadurch gekennzeichnet, daß** das Druckstück (9) als eine auf der Kontur der Kurvenscheibe (8) abrollende Rolle insbesondere mit einem Kugellager (10) ausgeführt ist.

4. Gelenkarm nach einem der Ansprüche 1 bis 3,
**dadurch gekennzeichnet, daß** eine Linearführung (11) zum Andrücken des Druckstückes (9) gegen die Kontur der Kurvenscheibe (8) vorgesehen ist.

5. Gelenkarm nach Anspruch 4,
**dadurch gekennzeichnet, daß** zur Bildung der Linearführung (11) zwei parallel zueinander angeordnete Führungsstangen (12) vorgesehen sind, auf denen ein das Druckstück (9) tragender Führungskörper (13) mit linearen Gleitlagern (14) geführt ist.

6. Gelenkarm nach einem der Ansprüche 1 bis 5,
**dadurch gekennzeichnet, daß** zur Bildung der Federvorspannung mindestens eine und bevorzugt zwei Schraubendruckfedern (15) vorgesehen sind.

7. Gelenkarm nach einem der Ansprüche 1 bis 6,
**dadurch gekennzeichnet, daß** eine manuell und werkzeuglos betätigbare Einrichtung (16) zur Einstellung der Federvorspannung vorgesehen ist.

8. Gelenkarm nach einem der Ansprüche 1 bis 7,
**dadurch gekennzeichnet, daß** der Armabschnitt (3) mittels des Schwenkgelenkes (5) an einem insbesondere ortsfesten Träger (6) gelagert ist.

9. Gelenkarm nach Anspruch 8,
**dadurch gekennzeichnet, daß** die Kontur der Kurvenscheibe (8) und die Federvorspannung des Druckstückes (9) derart aufeinander abgestimmt sind, daß bei einem positiven, von der Vertikalrichtung (17) abweichenden Gleichgewichtswinkel (α₁) ein den Gelenkarm (30) auslenkendes Gewichtskraftmoment (Mg₁) und ein von der Federanordnung erzeugtes Rückstellmoment (Mr₁) im Gleichgewicht stehen.

10. Gelenkarm nach Anspruch 9,
**dadurch gekennzeichnet, daß** das Gleichgewicht zwischen dem Gewichtskraftmoment (Mg₁) und dem Rückstellmoment (Mr₁) ein stabiles Gleichgewicht ist.

11. Gelenkarm nach einem der Ansprüche 1 bis 10,
**dadurch gekennzeichnet, daß** das Gesamtmoment (M₂) innerhalb des gesamten negativen Schwenkwinkelbereiches (-α) insbesondere einschließlich der Vertikalrichtung (17) in Richtung auf die Stützvorrichtung (18) weist.

12. Gelenkarm nach einem der Ansprüche 8 bis 11,
**dadurch gekennzeichnet, daß** der Gelenkarm (30) zusätzlich zu dem ersten Armabschnitt (3) mit dem gewichtsentlasteten Schwenkgelenk (5) einen zweiten Armabschnitt (4) aufweist, der mittels eines zweiten Schwenkgelenkes (19) an einem freien Ende (20) des ersten Armabschnittes (3) schwenkbar gelagert ist, wobei das Handstück (1) im Bereich eines freien Endes (21) des zweiten Armabschnittes (4) angeordnet ist.

13. Gelenkarm nach einem der Ansprüche 1 bis 12,
**dadurch gekennzeichnet, daß** der Armabschnitt (3) mittels des Schwenkgelenkes (39) um die im wesentlichen vertikale, etwa parallel zur Gewichtskraftrichtung liegende Gelenkachse (40) schwenkbar gelagert ist, wobei die zugeordnete Federanordnung (41) zur Rückstellung des Schwenkgelenkes (39) aus einer ausgelenkten Position in eine Neutralposition vorgesehen ist.

14. Gelenkarm nach einem der Ansprüche 1 bis 13,
**dadurch gekennzeichnet, daß** der Gelenkarm (30) in unmittelbarer Nähe zum Handstück (1), insbesondere zwischen dem freien Ende (21) des zweiten Armabschnittes (4) und dem Handstück (1) einen gelenkigen Armabschnitt (22) mit mindestens zwei, bevorzugt drei Winkelstücken (23) aufweist, die mit je zwei in einem festen Winkel (γ) zueinander stehenden Armsegmenten (24, 25) versehen sind, wobei an den Enden der Armsegmente (24, 25) jeweils ein Torsionsgelenk (26) des Gelenkarmes (30) vorgesehen ist, und wobei der Winkel (γ) von 90° abweicht.

15. Gelenkarm nach Anspruch 14,
**dadurch gekennzeichnet, daß** der Winkel (γ) größer als 100° ist und bevorzugt etwa 105° beträgt.

## Revendications

1. Bras articulé commandé manuellement (30) comprenant au moins une section de bras (3) qui est supportée de manière à pouvoir pivoter au moyen d'une articulation pivotante (5) autour d'un axe pivot (29), dans lequel l'articulation pivotante (5) est pourvue d'un agencement de ressort (7) agissant autour de l'axe pivot corrélé (29),
**caractérisé en ce que** le bras articulé est pourvu d'un embout optique (1) pour appliquer un faisceau laser (34) sur une zone de traitement et **en ce que** l'agencement de ressort (7) comprend un disque de came (8) et un organe de pression (9) reposant sous l'effet d'une prétension de ressort contre le disque de came (8) et commandé le long du contour du disque de came (8) en fonction d'un angle pivot (α) de la section de bras (3), dans lequel l'articulation pivotante (5) comporte un axe pivot sensiblement horizontal (29) qui est positionné transversalement par rapport à la direction de force de poids, dans lequel sur l'articulation pivotante (5) avec l'axe pivot horizontal (29) une plage d'angle pivot positif (+a) de la section de bras (3) par rapport à une direction verticale (17) est fournie pour le fonctionnement, dans lequel dans la plage d'angle pivot positif (+α) l'agencement de ressort (7) est fourni pour soulager l'articulation pivotante (5) des moments d'articulation agissant sur celle-ci et provoqués par des forces de poids, dans lequel sur l'articulation pivotante (5) il est fourni une plage d'angle pivot négatif (-α) de la section de bras (3) par rapport à la direction verticale (17) avec un angle de repos (α₂), auquel angle de repos (α₂) le bras articulé (30') repose dans un dispositif de support (18), et dans lequel le contour du disque de came (8) et la prétension de ressort de l'organe de pression (9) sont mis en correspondance l'un avec l'autre de sorte que, pour l'angle de repos (α₂), un moment total (M) résultant du moment de force de poids (Mg₂) et d'un moment de rétablissement (Mr₂) et agissant sur le bras articulé (30') autour de l'articulation pivotante (5) est orienté dans la direction vers le dispositif de support (18).

2. Bras articulé selon la revendication 1,
**caractérisé en ce que** l'organe de pression (9) est fixé immobile et **en ce que** le disque de came (8) est relié à la section de bras pouvant pivoter (3) afin d'être entraîné par celle-ci.

3. Bras articulé selon la revendication 1 ou 2,
**caractérisé en ce que** l'organe de pression (9) est réalisé en tant que rouleau roulant sur le contour du disque de came (8) et pourvu en particulier d'un roulement à billes (10).

4. Bras articulé selon l'une des revendications 1 à 3,
**caractérisé en ce qu'**un guide linéaire (11) est fourni pour forcer l'organe de pression (9) contre le contour du disque de came (8).

5. Bras articulé selon la revendication 4, **caractérisé en ce que**, pour former le guide linéaire (11), il est fourni deux tiges de guidage parallèles (12) sur lesquelles un organe de guidage (13) supportant l'organe de pression (9) est guidé avec des paliers coulissants linéaires (14).

6. Bras articulé selon l'une des revendications 1 à 5,
**caractérisé en ce que**, pour générer la prétension de ressort, il est fourni au moins un et de préférence deux ressorts de pression hélicoïdaux (15).

7. Bras articulé selon l'une des revendications 1 à 6,
**caractérisé en ce qu'**un dispositif actionnable manuellement (16), l'actionnement ne nécessitant aucun outil, est fourni pour ajuster la prétension de ressort.

8. Bras articulé selon l'une des revendications 1 à 7,
**caractérisé en ce que** la section de bras (3) est supportée au moyen de l'articulation pivotante (5) sur un support (6) qui est en particulier immobile.

9. Bras articulé selon la revendication 8,
**caractérisé en ce que** le contour du disque de came (8) et la prétension de ressort de l'organe de pression (9) sont mis en correspondance l'un avec l'autre de sorte que, pour un angle d'équilibre positif (α₁) s'écartant de la direction verticale (17), un moment de force de poids (Mg₁) déviant le bras articulé (30) et un moment de rétablissement (Mr₁) généré par l'agencement de ressort sont en équilibre.

10. Bras articulé selon la revendication 9, **caractérisé en ce que** l'équilibre entre le moment de force de poids (Mg₁) et le moment de rétablissement (Mr₁) est un équilibre stable.

11. Bras articulé selon l'une des revendications 1 à 10,
**caractérisé en ce que** le moment total (M₂) dans toute la plage d'angle de pivot négatif (-α), en particulier incluant la direction verticale (17), est orienté dans la direction vers le dispositif de support (18).

12. Bras articulé selon l'une des revendications 8 à 11,
**caractérisé en ce que** le bras articulé (30), en plus de la première section de bras (3) avec l'articulation pivotante soulagée du poids (5), comporte une deuxième section de bras (4) qui est supportée de manière à pouvoir pivoter au moyen d'une deuxième articulation pivotante (19) à l'extrémité libre (20) de la première section de bras (3), dans lequel l'embout (1) est agencé dans la zone d'une extrémité libre (21) de la deuxième section de bras (4).

13. Bras articulé selon l'une des revendications 1 à 12,
**caractérisé en ce que** la section de bras (3) est supportée de manière à pouvoir pivoter au moyen d'une articulation pivotante (39) autour d'un axe pivot sensiblement vertical (40) s'étendant approximativement parallèlement à la direction de force de poids, dans lequel un agencement de ressort corrélé (41) est fourni pour ramener l'articulation pivotante (39) de la position déviée à une position neutre.

14. Bras articulé selon l'une des revendications 1 à 13, **caractérisé en ce que** le bras articulé (30) à proximité immédiate de l'embout (1), en particulier entre l'extrémité libre (21) de la deuxième section de bras (4) et l'embout (1), comporte une section de bras articulé (22) avec au moins deux, de préférence trois, éléments d'angle (23) se composant chacun de deux segments de bras (24, 25) positionnés à un angle fixe (γ) l'un par rapport à l'autre, dans lequel aux extrémités des segments de bras (24, 25) il est respectivement fourni une articulation de torsion (26) du bras articulé (30), et dans lequel l'angle (γ) diffère de 90°.

15. Bras articulé selon la revendication 14,
**caractérisé en ce que** l'angle (γ) est supérieur à 100° et est de préférence d'approximativement 105°.
